# EUROPÄISCHE PATENTSCHRIFT

(11) **EP 1 116 251 B1**
(45) Veröffentlichungstag und Bekanntmachung des Hinweises auf die Patenterteilung: **08.05.2002**
(21) Anmeldenummer: 99955806.7
(22) Anmeldetag: 22.09.1999
(51) Int. Cl.: H01H 71/12, H02H 3/00

(54) **LEISTUNGSSCHALTER MIT EINEM BEMESSUNGSSTROMSTECKER**
CIRCUIT BREAKER WITH A RATED CURRENT PLUG CONNECTOR
DISJONCTEUR A PRISE DE COURANT NOMINAL

(30) Priorität: 25.09.1998 DE 19845825
(43) Veröffentlichungstag der Anmeldung: 18.07.2001
(73) Patentinhaber: SIEMENS AKTIENGESELLSCHAFT, 80333 München (DE)
(72) Erfinder: MIZENER, Jeffery-Cullen, D-12247 Berlin (DE)
(86) Internationale Anmeldenummer: DE9903090
(87) Internationale Veröffentlichungsnummer: WO0019473

(56) Entgegenhaltungen:
- WO-A-91/03828
- US-A- 5 204 798

## Beschreibung

Die Erfindung betrifft einen elektrischen Leistungsschalter mit folgenden Merkmalen:
- eine elektromechanische Baugruppe mit wenigstens einem Schaltkontakt (2), einer den Schaltkontakt (2) betätigenden Antriebsvorrichtung (3) und Verklinkungseinrichtungen zur Freigabe von Kraftspeichern zum Schließen und Öffnen des Schaltkontaktes (2),
- ein Stromsensor (4) zur Erfassung eines über den Schaltkontakt (2) fließenden Stromes,
- eine elektronische Auslöseeinheit (5) zur Verarbeitung eines Signales des Stromsensors (4) und zur Abgabe eines Signales zur Freigabe der Verklinkungseinrichtung für das Öffnen des Schaltkontaktes (2), und
- ein mit der Auslöseeinheit (5) zusammenwirkender Bemessungsstromstecker.

Ein Leistungsschalter mit diesen Merkmalen ist beispielsweise durch die US 5 027 091 A bekanntgeworden. Der Bemessungsstromstecker kann Träger mehrerer Eigenschaftskennwerte sein, von denen der Bemessungsstrom des Leistungsschalters die betrieblich wichtigste Größe darstellt. Durch das Einsetzen des Bemessungsstromsteckers in den Leistungsschaltern wird dieser somit auf die Bedingungen an seinem Einsatzort angepaßt. Es muß jedoch verhindert werden, daß ein Leistungsschalter durch einen ungeeigneten Bemessungsstromstecker auf einen Bemessungsstrom eingestellt wird, der oberhalb der physikalischen Grenzen des Leistungsschalters liegt oder auf einen Strom unterhalb bestimmter Meßgrenzen des Stromsensors. Um diese für den Benutzer wichtigen Bedingungen zu gewährleisten, weisen der Leistungsschalter und der Bemessungsstromstecker nach der genannten US-A Merkmale einer mechanischen Kodierung auf, durch die verhindert wird, daß ein ungeeigneter Bemessungsstromstecker in den Leistungsschalter eingesetzt werden kann.

Mechanische Kodierungen erfordern bekanntlich eine präzise Gestaltung, wenn das Einstecken eines ungeeigneten Bemessungsstromsteckers mit Sicherheit verhindert werden soll. Jedoch lassen sich mechanische Kodierungen manipulieren, so daß ein Mißbrauch nicht völlig auszuschließen ist. Auch kann irrtümlich oder absichtlich versucht werden, einen ungeeigneten Bemessungsstromstecker mit erhöhter Kraftanwendung einzuführen.

Der Erfindung liegt hiervon ausgehend die Aufgabe zugrunde, Leistungsschalter und zugehörige Bemessungsstromstecker derart auszubilden, daß eine größtmögliche Sicherheit gegen eine Verwendung ungeeigneter Bemessungsstromstecker bei gleichzeitig möglichst einfacher mechanischer Gestaltung erreicht wird.

Diese Aufgabe wird gemäß der Erfindung dadurch gelöst, daß der Auslöseeinheit eine Leseeinrichtung sowie eine Auswerteeinrichtung für Eigenschaftskennwerte des Bemessungsstromsteckers zugeordnet sind und daß durch die Auswerteeinrichtung Steuersignale zur Einstellung der Auslöseeinheit sowie zur Betätigung einer am Bemssungsstromstecker angeordneten Meldeeinrichtung ausgebbar sind.

Durch die Anordnung nach der Erfindung wird nicht das Einstecken eines ungeeigneten Bemessungsstromsteckers in einen Leistungsschalter verhindert, sondern das Wirksamwerden unpassender Eigenschaftskennwerte. Zugleich wird der Benutzer darauf aufmerksam gemacht, daß die vom Bemessungsstromstecker an die Auslöseeinheit übermittelten Eigenschaftskennwerte außerhalb zulässiger Grenzwerte liegen.

Sofern damit zu rechnen ist, daß ein Bemessungsstromstecker durch einen nicht ausreichend sachkundigen Benutzer gehandhabt wird, kann der Leistungsschalter nach einer Weiterbildung der Erfindung so gestaltet sein, daß bei Benutzung eines ungeeigneten Bemessungsstromsteckers durch ein von der Auswerteeinrichtung an die Auslöseeinheit abgegebenes Steuersignal für die Schutzwirkung der Auslöseeinheit wesentliche Eigenschafdtskennwerte auf eine minimale Größe zurücksetzbar sind. Damit kann zwar der Leistungsschalter in Betrieb genommen werden, jedoch ist seine Schutzwirkung auf niedrige Werte eingestellt, um Schäden am Leistungsschalter selbst bzw. an der zugeordneten Schalt- oder Verbraucheranlage auszuschließen.

Die erwähnte Meldeeinrichtung kann als von einem Benutzer wahrnehmbarer akustischer und/oder optisch wirkender Signalgeber ausgebildet sein. Da die Meldeeinrichtung bzw. der Signalgeber am Bemessungsstromstecker angeordnet ist, wird dem Benutzer die fehlerhafte Verwendung unmittelbar verdeutlicht. Besonders wirksam kann der Benutzer auf den Fehler dadurch aufmerksam gemacht werden, daß der Signalgeber als blinkende lichtemittierende Diode ausgebildet ist.

Die Erfindung wird im folgenden anhand des in den Figuren dargestellten Ausführungsbeispieles näher erläutert.

Die Figur 1 zeigt die grundsätzliche Anordnung einer zu einem Leistungsschalter gehörenden Auslöseeinheit und eines Bemessungsstromsteckers.

In der Figur 2 ist ein Flußdiagramm zur Auswertung der in einem Bemessungsstromstecker gespeicherten Eigenschaftskennwerte dargestellt.

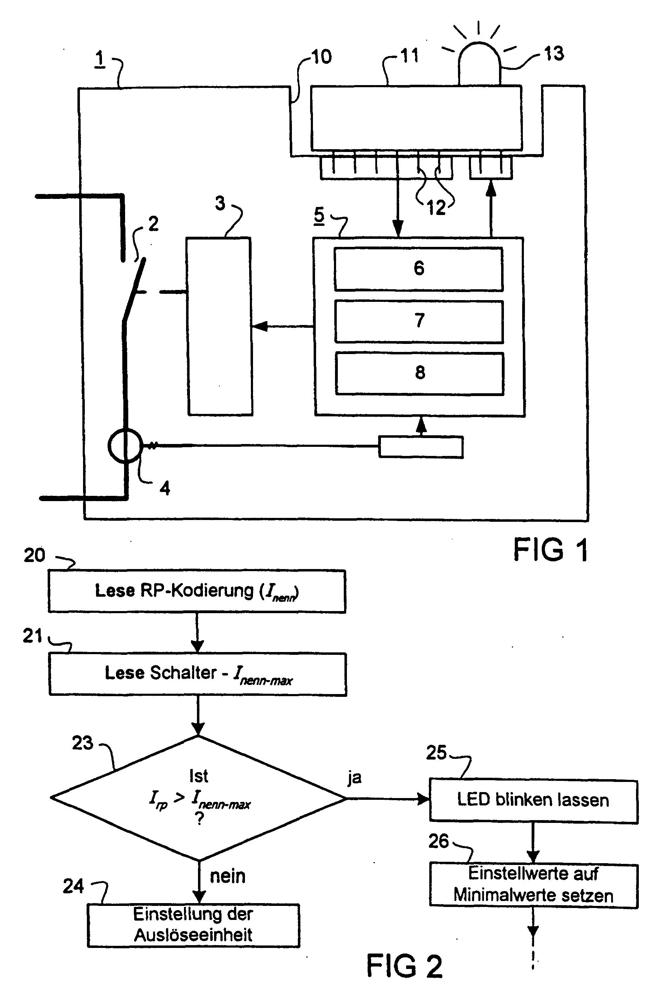

In der Figur 1 ist ein Leistungsschalter 1 schematisch angedeutet. Er enthält eine elektromechanische Baugruppe mit einem Schaltkontakt 2 und einer zugehörigen Antriebsvorrichtung 3, welche die erwähnten Kraftspeicher zum Schließen und Öffnen des Schaltkontaktes enthalten. Diese Komponenten sind nicht näher dargestellt, da sie bei Leistungsschaltern der vorliegend betrachteten Art bekannt sind und für den vorliegenden Zweck keiner besonderen Ausgestaltung bedürfen.

Ferner enthält der Leistungsschalter 1 einen Stromsensor 4 sowie eine Auslöseeinheit 5, zu der neben einer Mikroprozessoreinrichtung 6 eine Leseeinrichtung 7 sowie eine Auswerteeinrichtung 8 gehören. Am Gehäuse des Leistungsschalters 1 ist eine vereinfacht gezeigte Aufnahmevorrichtung 10 für einen Bemessungsstromstecker 11 angeordnet. Dieser ist Träger von Eigenschaftskennwerten, insbesondere des Bemessungsstromes. Eine bekannte Möglichkeit zur Hinterlegung des Bemessungsstromes im Bemessungsstromstecker besteht darin, einen Widerstand definierter Größe vorzusehen. Weitere Eigenschaftskennwerte können gleichfalls mit Hilfe von Widerständen kodiert sein. Beim Einstecken des Bemessungsstromsteckers 11 in den Leistungsschalter 1 wird mittels Kontaktstiften 12 eine Verbindung mit der zu der Auslöseeinheit 5 gehörenden Leseeinrichtung 7 hergestellt. Diese ermittelt anhand des zwischen bestimmten Kontaktstiften 12 meßbaren Widerstandswertes einen Eigenschaftskennwert, das heißt einen bestimmten Parameter sowie seinen Zahlenwert.

Die Auswerteeinrichtung 8 dient zur Prüfung, ob die gelesenen Eigenschaftskennwerte für den Leistungsschalter 1 zulässig sind. Insbesondere darf kein Bemessungsstrom eingestellt werden, der oberhalb des zulässigen Kurzzeitstromes des Schaltkontaktes 2 liegt. Ebensowenig ist es zulässig, einen Strom einzustellen, der unterhalb des Meßbereiches des Stromsensors 4 liegt.

Anhand der Figur 2 wird das Zustandekommen der erforderlichen Schutzmaßnahmen erläutert. Zunächst sei darauf hingewiesen, daß der Bemessungsstromstecker 11 unabhängig von den kodierten Eigenschaftskennwerten in die Aufnahmevorrichtung 10 am Leistungsschalter 1 eingesetzt werden kann. Eine fehlerhafte Handlung des Benutzers ist damit prinzipiell möglich. Hierdurch wird vermieden, daß bei einer beispielsweise ähnlichen mechanischen Kodierung zwischen Aufnahmevorrichtung 10 und Bemessungsstromstecker 11 ein vermeintliches Hindernis dadurch zu beseitigen versucht, daß er den Bemessungsstromstecker 11 mit erhöhtem Kraftaufwand in die Aufnahmevorrichtung 10 drückt und hierdurch an beiden Teilen Schäden entstehen.

Nach der Figur 2 wird der erforderliche Schutz dadurch erreicht, daß die Leseeinrichtung in einem ersten Schritt 20 die Kodierung des Bemessungsstromsteckers 11 erfaßt und sodann in einem weiteren Schritt 21 den für den Leistungsschalter 1, das heißt insbesondere für den Schaltkontakt 2, zulässigen maximalen Strom einliest. In einem weiteren, der Auswerteeinrichtung 7 zugeordneten Schritt 23 werden die eingelesenen Werte verglichen. Sofern sich ergibt, daß der Eigenschaftskennwert des Bemessungsstromsteckers 11 innerhalb zulässiger Grenzen liegt, wird die Auslöseeinheit 5 in einem nachfolgenden Schritt 24 auf den betreffenden Eigenschaftskennwert eingestellt, der nun für die Schutzwirkung des Leistungsschalters 1 wirksam ist.

Ergibt dagegen der Vergleich im Schritt 23, daß der Eigenschaftskennwert außerhalb der zulässigen Grenzen liegt, so wird durch ein von der Auswerteeinrichtung 7 abzugebendes Steuersignal eine an dem Bemessungsstromstecker angeordnete Meldeeinrichtung 13 aktiviert, die als lichtemittierende Diode (Figur 1) ausgebildet ist. Ein weiteres Steuersignal der Auswerteeinrichtung 8 bewirkt entsprechend dem Schritt 26 in Figur 2 die Einstellung der Auslöseeinheit 5 (Figur 1) auf minimale Schutzwerte.

Sofern die Auslöseeinheit 5 über eine Anzeigevorrichtung verfügt, zum Beispiel ein LCD-Display, so können die Schutzwerte auch direkt angezeigt werden. Unabhängig davon, welche Art einer vom Benutzer wahrnehmbaren Meldeeinrichtung 13 vorgesehen ist, wird durch direkte Betätigung der Auslöseeinheit 5 im Schritt 26 für den notwendigen Schutz gesorgt.

## Patentansprüche

1. Elektrischer Leistungsschalter (1) mit folgenden Merkmalen:
- eine elektromechanische Baugruppe mit wenigstens einem Schaltkontakt (2), einer den Schaltkontakt (2) betätigenden Antriebsvorrichtung (3) und Verklinkungseinrichtungen zur Freigabe von Kraftspeichern zum Schließen und Öffnen des Schaltkontaktes (2),
- ein Stromsensor (4) zur Erfassung eines über den Schaltkontakt (2) fließenden Stromes,
- eine elektronische Auslöseeinheit (5) zur Verarbeitung eines Signales des Stromsensors (4) und zur Abgabe eines Signales zur Freigabe der Verklinkungseinrichtung für das Öffnen des Schaltkontaktes (2),
- ein mit der Auslöseeinheit (5) zusammenwirkender Bemessungsstromstecker (11),
**gekennzeichnet durch** folgende weitere Merkmale:
- der Auslöseeinheit (5) sind eine Leseeinrichtung (7) sowie eine Auswerteeinrichtung (8) für Eigenschaftskennwerte des Bemessungsstromsteckers (11) zugeordnet,
- **durch** die Auswerteeinrichtung (8) sind Steuersignale zur Einstellung der Auslöseeinheit (5) sowie zur Betätigung einer am Bemessungsstromstecker (11) angeordneten Meldeeinrichtung (13) ausgebbar.

2. Leistungsschalter nach Anspruch 1,
**dadurch gekennzeichnet**, d a ß bei Benutzung eines ungeeigneten Bemessungsstromsteckers (11). durch ein von der Auswerteeinrichtung (8) an die Auslöseeinheit (5) abgegebenes Steuersignal für die Schutzwirkung der Auslöseeinheit (5) wesentliche Eigenschaftskennwerte auf eine minimale Größe zurücksetzbar sind.

3. Leistungsschalter nach Anspruch 1 oder 2,
**dadurch gekennzeichnet, daß** die Meldeeinrichtung (13) als von einem Benutzer wahrnehmbarer akustisch und/oder optisch wirkender Signalgeber ausgebildet ist.

4. Leistungsschalter nach Anspruch 3,
**dadurch gekennzeichnet, daß** die Meldeeeinrichtung (13) als blinkende lichtemittierende Diode ausgebildet ist.

## Claims

1. Electrical circuit-breaker (1) having the following features:
- an electromechanical module with at least one switching contact (2), a drive device (3), actuating the switching contact (2), and latching devices for enabling energy storage mechanisms for closing and opening the switching contact (2),
- a current sensor (4) for sensing a current flowing across the switching contact (2),
- an electronic tripping unit (5) for processing a signal of the current sensor (4) and for emitting a signal for enabling the latching device for opening the switching contact (2),
- a rated-current plug connector (11) which acts together with the tripping unit (5),
**characterized by** the following further features:
- a read device (7), and an evaluation device (8) for characteristic values of the rated-current plug connector(11), are assigned to the tripping unit (5),
- through the evaluation device (8), control signals can be output for setting the tripping unit (5) and for actuating an indicator device (13) located on the rated-current plug connector (11).

2. Circuit-breaker according to Claim 1,
**characterized in that** upon use of an unsuitable rated-current plug connector (11), a control signal emitted from the evaluation device (8) to the tripping unit (5) causes characteristic values which are essential for the protective action of the tripping device (5) to be reset to a minimum quantity.

3. Circuit-breaker according to either of Claims 1 or 2,
**characterized in that** the indicator device (13) can be designed as an acoustic- and/or optical-action signal generator by which a user can be alerted.

4. Circuit-breaker according to Claim 3,
**characterized in that** the indicator device (13) is designed as a flashing light-emitting diode.

## Revendications

1. Disjoncteur (1) électrique, ayant les caractéristiques suivantes :
- un module électromécanique ayant au moins un contact (2) de commutation, un dispositif (3) de transmission actionnant le contact (2) de commutation et des dispositifs d'encliquetage pour libérer des forces emmagasinées en vue de fermer et d'ouvrir le contact (2) de commutation,
- un capteur (4) de courant destiné à relever un courant passant par le contact (2) de commutation,
- une unité (5) électronique de déclenchement destinée au traitement d'un signal du capteur (4) de courant et destinée à émettre un signal de libération du dispositif d'encliquetage pour l'ouverture du contact (2) de commutation,
- un connecteur (11) à prise de courant nominal qui coopère avec l'unité (5) de déclenchement,
**caractérisé par** les caractéristiques supplémentaires suivantes :
- à l'unité (5) de déclenchement sont associés un dispositif (7) de lecture ainsi qu'un dispositif (8) d'exploitation de valeurs caractéristiques de propriété du connecteur (11) à prise de courant nominal,
- il est émis par le dispositif (8) d'exploitation des signaux de commande destinés à régler l'unité (5) de déclenchement ainsi qu'à actionner un dispositif (13) d'indication monté sur le connecteur (11) à prise de courant nominal.

2. Disjoncteur suivant la revendication 1, **caractérisé en ce que**, lors de l'utilisation d'un connecteur (11) à prise de courant nominal qui ne convient pas, des valeurs caractéristiques de propriétés essentielles pour l'effet de protection de l'unité (5) de déclenchement peuvent être ramenées à une valeur minimum par un signal de commande envoyé par le dispositif (8) d'exploitation à l'unité (5) de déclenchement.

3. Disjoncteur suivant la revendication 1 ou 2, **caractérisé en ce que** le dispositif (13) indicateur est constitué sous la forme d'un générateur de signaux à effet acoustique et/ou optique pouvant être perçus par un utilisateur.

4. Disjoncteur suivant la revendication 3, **caractérisé en ce que** le dispositif (13) d'indication est constitué sous la forme d'une diode électroluminescente clignotante.
